# EUROPEAN PATENT SPECIFICATION

(11) **EP 3 710 670 B1**
(45) Date of publication and mention of the grant of the patent: **27.07.2022**
(21) Application number: 18806984.3
(22) Date of filing: 07.11.2018
(51) Int. Cl.: E21B 33/035, E21B 33/038, H01R 13/523

(54) **AUXILIARY EQUIPMENT PROVISION**
BEREITSTELLUNG VON HILFSAUSRÜSTUNG
FOURNITURE D'ÉQUIPEMENT AUXILIAIRE

(30) Priority: 17.11.2017 GB 201719033
(43) Date of publication of application: 23.09.2020
(73) Proprietor: Baker Hughes Energy Technology UK Limited, Bristol BS48 1BS (GB)
(72) Inventor: VANGASSE, Anthony Jason, Nailsea Bristol BS48 1BS (GB); PHILLIPS, Raymond, Nailsea Bristol BS48 1BS (GB)
(74) Representative: Novagraaf Group
(86) International application number: PCT/EP2018/080503
(87) International publication number: WO 2019/096655

(56) References cited:
- GB-A- 2 477 714
- GB-A- 2 541 192
- US-A1- 2011 000 677
- US-A1- 2011 025 526
- US-A1- 2014 305 656

## Description

The present invention relates to a method and apparatus for providing auxiliary equipment at a subsea location. In particular, but not exclusively, the present invention relates to the use of a movable housing which contains an electronic auxiliary device such as a wireless transceiver unit, which can be secured between wet mating connectors provided by a Subsea Control Module (SCM) and an associated flying lead. Securing the housing in place simultaneously supports the electronic device at a desired location so it can communicate with a nearby sensor and electrically connects the device to power and/or a data bus provided by the SCM and/or flying lead.

It is known that from time to time an electronic auxiliary device is required at locations where such use was not initially planned/envisaged. Examples of such electronic auxiliary devices are manifold. For example, any electronic device that can be thought of as being capable of functioning independently remote from a main control unit is an electronic auxiliary device. Likewise, electronic devices that can be located remote from a main control unit and which can be connected, via a wired or wireless communication link to the main control unit can be thought of as an electronic auxiliary device. Examples are a wireless transceiver to communicate with remote sensors, a monitor unit for monitoring a local parameter, a remote controller, a line insulation monitor, or the like.

Often such electronic auxiliary devices would be desired at a subsea location where their introduction would be complicated and costly. For example, development of oil fields which are under water involves drilling a well on the sea bed. For those wells which are completed "subsea" the well is capped using a subsea tree. The subsea tree carries out multiple functions. One is to contain the natural pressure of a hydrocarbon reservoir and at least one further function is to control the flow of reservoir fluids from the well bore through a flow line to a subsea gathering facility. The control of flow is achieved with a number of control valves in the flow path of the fluids produced by the well. At least one of the control valves is a variable orifice type valve commonly known as a choke valve. Such a valve controls the rate of flow by causing a differential pressure drop across the choke valve between inlet and outlet.

Conventionally the subsea tree is connected to a subsea manifold using a subsea flow line referred to as a "jumper". The manifold is arranged to collect hydrocarbon well bore fluids from several other wells where the collected fluids can be co-mingled into a common header. Such developments are often referred to as a manifold cluster development. The flow line jumper connection comprises a pipe that can be of a flexible type but may alternatively be a rigid pipe design using a zig-zag geometric shape. This helps provide a level of construction tolerance when connecting the tree to the manifold.

The subsea tree also contains a number of sensors for measurement of pressures and temperatures of the produced fluids and to detect a position or state of the flow control valves. Conventionally the tree assembly is controlled by a Subsea Control Module (SCM). This commands the flow control valves. This is often achieved using a solenoid controlled actuator to pilot hydraulic or electrically powered actuators. Conventionally the SCM contains control electronics to generate flow control commands and also provide a data multiplexing capability for digitising inputs from the on-tree sensors and the measurements are used for the purposes of monitoring and reporting or comparison and decision making.

Conventionally an SCM has been equipped with at least one Subsea Electronics Module (SEM). The SEM has conventionally provided a data acquisitions/data multiplexing service to a number of sensors. Such sensors have been sensors for pressure and/or temperature and/or valve position or other parameters and have been disposed around the tree. Conventionally there have been multiple types of interface between the sensors and the SEM. Conventionally one such communication technique between an SEM and sensors around a subsea location have been the inclusion of an interface card provided within an SEM enclosure to transfer data from a sensor using connection wires which pass into the SCM and subsea electronics module via a multi-way wet mating connector. Such wet mating connectors have conventionally been provided on a top surface on an SCM providing communication to an interface card internal to the SEM. Wet mating connectors may also be fitted on a top surface of a subsea power-switching and communications-routing module or in other subsea locations.

Multi-way wet mating connectors are thus well known. These typically have two parts. A first fixed part which can be secured to a top surface of an SCM for example and a removable part which conventionally has optionally been integrated with an interconnection harness. Various types of wet mate connector are shown in a wet mate connector market study prepared for ORE Catapult doc ref 2500014-01-D-3-001 dated 21 March 2014. This has been produced by Wood Group Kenny.

The fixed wet mating connector is referred to hereinafter as a receptacle. This can be thought of as a "female" socket. Multiple connections may be made via respective wired or fibre pins/ports carried by the receptacle wet mate connector. The removable wet mating connector is referred to hereinafter as a "flying" element. This may be a plug-like element and can thus be thought of as a "male" element. Multiple connections may be made via respective wired or fibre port/pins carried by the plug wet mate connector. It will be appreciated that the female receptacle can carry male or female connections although typically the receptacle wet mate connector presents female connection ports. Likewise, the male plug wet mate connector can carry male or female connections although typically the plug wet mate connector presents male connection pins. It will likewise be appreciated for the avoidance of doubt that the wet mating connectors can be reversed so that the receptacle part can terminate a flying lead and a plug wet mate connector can be fixed.

Conventionally a type of sensor interface linking an SEM to a remote sensor or sensor array has included a data-bus interface via a shared two-wire or four-wire system which can optionally be connected to a number of sensors connected to the data and power bus. The subsea industry has begun standardising this data highway connection as "SIIS-Subsea Instrumentation Interface Standardisation which is being defined by the international standard from the API 17F Rev 3. US 2014/305656 A1 discloses an SCM with two retrievable subsea electronics modules

Conventionally when a new sensor or control element not originally envisaged when an SCM is first secured in place at a subsea tree is to be added at a subsea location the SCM must first be recovered and electrical connections in the SCM reconfigured to make connection to a duly located sensor. This can be a complicated and time consuming and thus costly process.

Sometimes an upper surface of an SCM does not physically have any room for additional connectors for conventional wired connections to newly desired electronic devices. Likewise, sometimes new equipment such as sensors or controllers are needed at a location that is too far away from the fixed location of an SCM to use a wired connection.

The present invention is defined in the accompanying claims.

It is an aim of the present invention to at least partly mitigate the above-mentioned problems.

It is an aim of certain embodiments of the present invention to provide a method and apparatus for providing auxiliary equipment at a subsea location in a convenient manner.

It is an aim of certain embodiments of the present invention to enable an adapter unit formed as a housing which includes at least one electronic auxiliary device such as a wireless transceiver, to be connected conveniently by interposing the adapter unit between opposed wet mating connectors.

It is an aim of certain embodiments of the present invention to provide a method and apparatus for retrofitting auxiliary equipment at a subsea location where the auxiliary equipment can be chosen according to need and conveniently secured in place simultaneously providing the auxiliary device together with any needed electrical contacts and power at a fixed desired position.

It is an aim of certain embodiments of the present invention to enable an owner of a subsea production system installation to conveniently add sensors to a facility after that facility has been installed and is operating.

It is an aim of certain embodiments of the present invention to enable wireless communication sensors to be accommodated together with conventional wired connections.

According to a first aspect of the present invention there is provided apparatus for providing auxiliary equipment at a subsea location, comprising:
a housing including at least one wet mate receptacle connector and at least one wet mate plug connector spaced apart from the receptacle connector;
at least one electronic auxiliary device in the housing;
at least one connector member extending through a portion of the housing connecting at least one connection element of the wet receptacle connector to a respective at least one connection element of the wet plug connector; wherein
the auxiliary device is connected to the connector member in the housing to thereby connect the auxiliary device to the connector member.

Aptly the auxiliary device comprises a wireless communication device.

Aptly the wireless communication device comprises an acoustic or optical or radio frequency communication device.

Aptly the wireless communication device comprises a wireless receiver element for receiving data transmitted via a wireless communication link from at least one sensor remote from said housing.

Aptly the wireless communication device comprises a wireless transmitter element for transmitting data to at least one remote sensor via a wireless communication link.

Aptly the housing provides an adaptor unit securable between wet mating connectors of a subsea fixture and an associated flying lead respectively.

Aptly the connector member comprises a wired data bus and/or power rail.

Aptly the at least one connector member comprises an optical fibre element.

Aptly the auxiliary device is connected to the at least one connection element of a wet receptacle connector and the at least one connection element of the wet plug connector via a wired and/or optical connection.

Aptly the housing is a water resistant and pressure resistant housing.

Aptly the wet mate receptacle connector is on an upper external surface of the housing and the wet mate plug connector is on a lower external surface of the housing.

Aptly the subsea location comprises a subsea production system installation that comprises a Subsea Control Module (SCM) and the SCM comprises the at least one wet mate receptacle connector.

According to a second aspect of the present invention there is provided a method of retro fitting auxiliary equipment at a subsea location, comprising the steps of:
disconnecting a flying lead, terminated by a flying lead wet mate plug connector, from a subsea fixture comprising at least one subsea fixture wet mate receptacle connector;
securing a housing containing at least one electronic auxiliary device to the subsea fixture by securing a housing wet mate plug connector of the housing to the subsea fixture wet mate receptacle connector; and
re-connecting the flying lead wet mate plug connector to a housing wet mate receptacle connector of the housing.

Aptly the method further comprises electrically connecting the electronic auxiliary device to a power supply by securing the housing between the flying lead and subsea fixture.

Aptly the method further comprises connecting the electronic auxiliary device to a data communication pathway extending between the subsea fixture and the flying lead by securing the housing between the flying lead and the subsea fixture thereby locating at least one connector member of the housing in communication with the subsea fixture and/or the flying head and the electronic auxiliary device.

Aptly the method further comprises receiving data from or transmitting data to a sensor element remote from the subsea fixture via the electronic auxiliary device.

Aptly the method further comprises providing data to be transmitted wirelessly from the electronic auxiliary device to the electronic auxiliary device via a processor element of the subsea fixture or a processor element connected to the electronic auxiliary device via the flying lead.

Aptly the method further comprises providing data received wirelessly at the electronic auxiliary device to a processor element in the subsea fixture or a processor element connected to the electronic auxiliary device via the flying lead.

Aptly the method further comprises wirelessly communicating between the electronic auxiliary device and a sensor remote from the electronic auxiliary device via acoustic and/or optical and/or radio frequency wireless communication.

Aptly the method further comprises disconnecting and subsequently reconnecting the flying lead wet mating connector via an ROV or AUV or diver.

According to a third aspect of the present invention there is provided a method of retrieving and/or replacing a subsea adaptor comprising a housing containing a first electronic auxiliary device and at least one wet mate receptacle connector and at least one wet mate plug connector, comprising the steps of:
via an ROV or AUV or diver, disconnecting a flying lead terminated in a flying lead wet mate plug connector from a first housing containing an associated first electronic auxiliary device;
disconnecting the first housing from a subsea fixture by unsecuring a housing wet mate plug connector from a subsea fixture wet mate receptacle connector; and
retrieving the first housing via the ROV or AUV or diver and/or replacing the first housing with a further housing containing an associated at least one further electronic auxiliary device via the ROV or AUV or diver.

Certain embodiments of the present invention enable auxiliary equipment, such as a transceiver unit or other such electronic auxiliary device able to communicate with a remote sensor via a wireless communication link, to be provided at a subsea location.

Certain embodiments of the present invention enable various forms of electronic auxiliary devices to be retrofitted to an SCM at a subsea tree without having to first recover the SCM.

Certain embodiments of the present invention provide a wireless "adapter unit" that can provide a wireless communication link to a remote sensor or controller and which can conveniently connect to existing sensor interface circuitry such as a data bus and/or power rail via an interface module.

Certain embodiments of the present invention provide an "on board" electronic auxiliary device and associated interface module in a common housing that can be interposed between conventional wet mate connectors to thereby connect to an SCM and/or flying lead in a "plug-and-play" fashion.

Certain embodiments of the present invention will now be described hereinafter, by way of example only, with reference to the accompanying drawings in which:
Figure 1 illustrates a subsea environment;
Figure 2 helps illustrate the SCM and wet connectors shown in Figure 1;
Figure 3 illustrates the wet connectors of the SCM connected to an interposed adapter unit;
Figure 4 schematically illustrates an adapter unit;
Figure 5 schematically illustrates an adapter unit being secured between an SCM and a flying lead; and
Figure 6 illustrates male and female connection elements in the form of pins and ports of a wet mating plug and receptacle.

In the drawings like reference numerals refer to like parts.

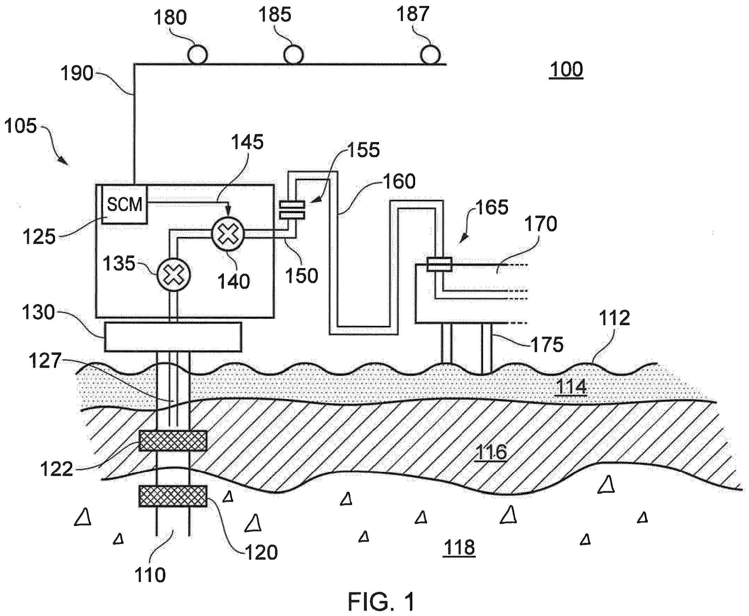

Figure 1 illustrates a particular subsea environment 100. It will be appreciated that embodiments of the present invention are not restricted to use at such locations but are more generally applicable wherever an electronic auxiliary device is desired at a particular location where wet mating connectors are present. In particular Figure 1 illustrates a location of a subsea tree 105 which is located above a well bore 110 penetrating the sea bed 112. The well bore 110 passes through multiple layers under the sea bed 112. For example, as shown in Figure 1, a first layer 114 immediately below the sea bed 112 comprises a band of material having a high sand content. A further layer 116 below the first layer 114 holds less sand. A still further layer 118 lies below the further layer 116 and holds little or no sand content. A hydrocarbon reserve may be found in a layer or in a region bridging multiple layers. It will be appreciated that the relative depths, thicknesses and sand/rock content will be different for each well bore location.

The well bore 110 passes through multiple layers and may pass many hundreds of metres or even more under the sea bed. The well bore 110 illustrated in Figure 1 includes a first collar valve 120 in the deep layer 118 and a further collar valve 122 in the middle layer 116 shown in Figure 1. Each collar valve 120, 122 is a selection element which effectively opens and closes under control of a Subsea Control Module (SCM) 125 in the subsea tree 105. By selectively controlling the open/closed status or, optionally, the partially open status of a respective collar valve 120, 122 liquid or gaseous components from the respective layers 116 can be gathered into the well bore region which contains a respective well bore production tubing 127. In this way a composition of fluid (proportion of gas or liquid or gas and liquid) can be selected. The fluid is thus multiphase in the sense that it can include different compositions of oil, gas, water and solid (sand or fine rock). It will be appreciated that certain embodiments of the present invention may include only a single bore with no collar valves in which case a composition of fluid flowing along a fluid flow pathway may be selected in other ways.

The subsea tree 105 is secured to a well head 130. This secures the subsea tree at a fixed desired location with respect to the sea bed 112. The well bore production tubing 127 passes through the well head into the subsea tree via an on/off flow isolation valve 135. This can be controlled via the SCM 125 to selectively permit fluid from the well bore production tubing 127 to flow to a desired downstream location via a fluid flow pathway which provides a fluid communication route.

As illustrated in Figure 1 the subsea tree further includes a choke valve 140. This valve can selectively open and close or be partially opened using a variable orifice element to fully or partially constrain fluid flow along the fluid flow pathway. In this way the choke valve 140 governs flow rate, and thus an operational parameter of fluid flowing along a fluid flow pathway. Other types of governor element can of course be utilised dependent upon the operational parameter being governed. The choke valve 140 receives a control signal via a respective connection 145, from an SCM 125. In this way selection of the opening provided by the choke valve 140 can vary the fluid flowing along a fluid flow pathway. The choke valve is an example of an element that can select a flow rate or other parameter and which can be controlled via an input signal.

It will be appreciated that whilst an embodiment of the present invention has been described with respect to control using an SCM certain other embodiments of the present invention permit control via a 'Top Side' controller. For example, the subsea tree 105 can be connected via one or more umbilicals to a Topside Umbilical Termination Assembly (TUTA) of an Floating Production Storage and Offloading (FPSO) facility. Two way communication between a Master Control Station (MCS) and the subsea tree 105 can be provided by conventional techniques.

As illustrated in Figure 1 the pipe work 150 which helps define the fluid flow pathway is generally a rigid structure within the subsea tree. This is connected via a respective flow line connector 155 to a respective jumper 160. The jumper 160 shown in Figure 1 is a rigid jumper although it will be appreciated that a flexible pipe may alternatively be utilised. A first end of the jumper 160 is connected to the connector 155 of the subsea tree 105. A further end of the jumper 160 is connected to a respective flow line connector 165 of a manifold 170. The manifold 170 is secured to the sea bed via respective manifold support legs 175. Other connectors can be supported on the manifold 170 and these are connected via respective jumpers to other subsea trees (not shown in Figure 1). The output from the manifold 170 flows along a single exit pipeline. The composition of the fluid flowing along the exit pipeline may be a combination of fluid from multiple subsea trees and that composition may be mixed by allowing fluid from multiple jumpers to flow into the manifold simultaneously. Alternatively, the output along the exit pipe may merely be fluid flowing from a single subsea tree.

Figure 1 also helps illustrate how multiple sensors 180, 185, 187 can be located to detect respective parameters in the subsea environment. Sensors can be located in additional or alternative locations to detect a parameter in sea water or on a fixture in other locations. The sensors shown are connected to the SCM via a "harness" 190.

Other techniques for providing wired and/or wireless connection could of course be utilised.

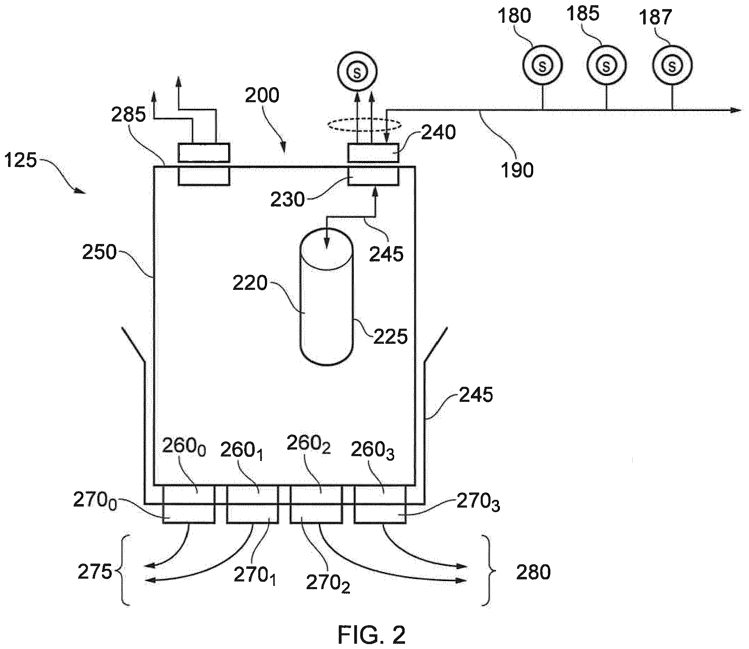

Figure 2 illustrates the Subsea Control Module (SCM) 125 in the subsea tree 105 in more detail. As illustrated in Figure 2 each sensor 180, 185, 187 is connected via a respective wired connection 190 to a sealed, wet mating connector interface region 200 at the top of the SCM. The SCM receives electrical power, communication signals, and hydraulic power supplies from surface control equipment via an umbilical (not shown). Redundant supply of communication signals and electrical and hydraulic power may be likewise transmitted through a corresponding umbilical copper core or hose connecting a top side to the subsea tree. The umbilical hose length may be a few hundred metres up to potentially many kilometres in length linking the subsea environment to surface equipment. The SCM is utilised to help distribute power to solenoid piloting valves, pressure transducers and temperature transducers in the subsea tree which can be utilised to control the flow isolation valve 135 and choke valve 140.

A Subsea Electronics Module (SEM) 220 is located within the SCM 125. The SEM is a sealed unit, held at a selected pressure, and containing electronic assemblies which are fed with on board power from a power source (not shown). The SEM has a housing 225 with a connection to a respective wet mating connector 230. The SEM is connected to the wet mating connector 230 which in the example shown is a receptacle wet mating connector which includes multiple female parts to receive corresponding pins of a plug wet mating connector 240. The SEM is connected to the receptacle wet mating connector 230 via a wired connection 245 in the SCM 125.

Figure 2 helps illustrate how the SCM 125 is secured in an SCM mounting base 245. This enables the SCM to be recovered by an ROV or AUV or diver as required. When an SCM is introduced into the tree the container body 250 of the SCM is introduced into the open mouth of the mounting base 245 and multiple wet mating connectors 260_{0,1,2,3} on a lower surface of the SCM simultaneously engage with corresponding reciprocating wet mating receptors 270_{0,1,2,3} which are provided on the SCM mounting base 245. In this way an SCM can simultaneously be duly located and secured in place in the SCM mounting base and electrical and/or optical and/or other types of connection can automatically be created. For example, as shown in the example illustrated schematically with respect to Figure 2 the first and second wet mating connector pairs 260₀, 270₀, 260₁, 270₁ can be utilised to provide multiple electrical connections 275 within the subsea tree. The third and fourth pairs of wet mating connectors 260₂, 270₂, 260₃, 270₃ can be utilised to provide multiple hydraulic connections 280 for use in the subsea tree.

Figure 2 thus helps illustrate how wet mating connectors on a lower surface of a SCM can be utilised to enable an SCM to be recovered and/or duly put in place at a subsea tree simultaneously making electrical and/or hydraulic and/or optical connections as required for use at the subsea tree. An upper surface 285 of the SCM (or other accessible surface) which is left revealed when the SCM is duly located in an SCM mounting base of a subsea tree likewise provides a wet mating connector region 200 where multiple fixed wet mating receptacles are located which can be selectively connected via flying leads terminated in a respective wet mating connector to the SCM. It will be appreciated that the wet mating connectors on the upper surface 285 of the SCM can be configured according to need/choice but changes to such configuration requires an SCM to be recovered.

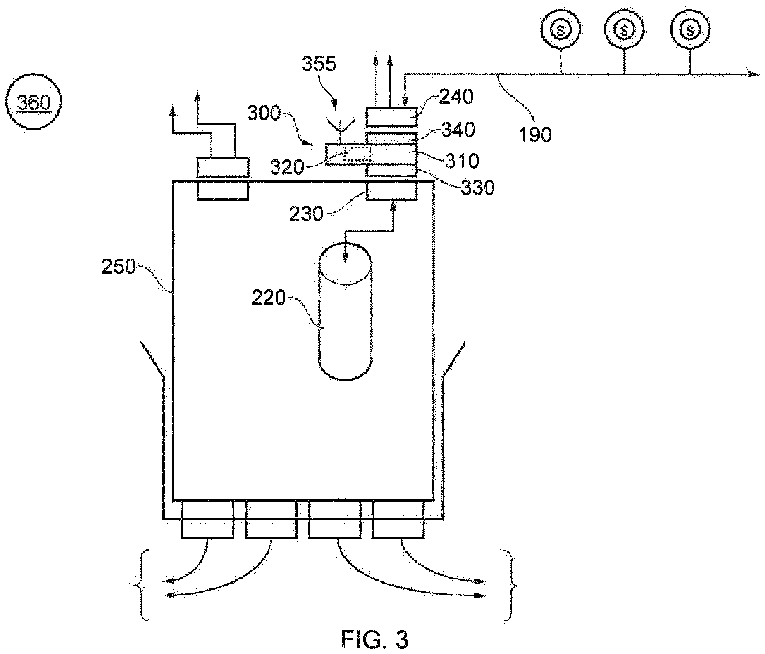

Figure 3 helps illustrate how an adapter unit 300 can be interposed between a fixed wet mating connector 230 and a flying wet mating connector 240. The adapter unit 300 provides apparatus for providing auxiliary equipment at a subsea location. The adapter unit 300 includes a housing 310 which can contain at least one electronic auxiliary device 320. The housing 310 also carries a wet mate plug connector 330 and a wet mate receptacle connector 340. The wet mate plug connector 330 of the housing can connect with a corresponding receptacle wet mate connector 230 on the upper surface of the SCM whilst the receptacle wet mate connector 340 of the adapter unit can make a corresponding mating connection with the plug wet mating connector 240. In this way the adapter unit can be secured in place between opposing wet mating connectors. The interposition of the adapter unit between wet mating connectors both secures the adapter at a desired physical location with respect to the SCM and likewise makes electrical/optical/hydraulic or other connection through the adapter unit. In this way for example the harness 190 and associated sensors will still be provided with any connection needed to enable those sensors to be duly utilised.

As illustrated in Figure 3 the adapter unit 300 can optionally include an antenna 355 on the external surface of the housing 310. Via the electronic auxiliary device 320 in the housing the antenna 355 can be used to communicate wirelessly with a slave device such as a sensor 360 which is remote from the SCM but local enough for wireless communication with the antenna 355. It will be appreciated by those skilled in the art that a suitable antenna 355 may optionally rather be included within the housing 310.

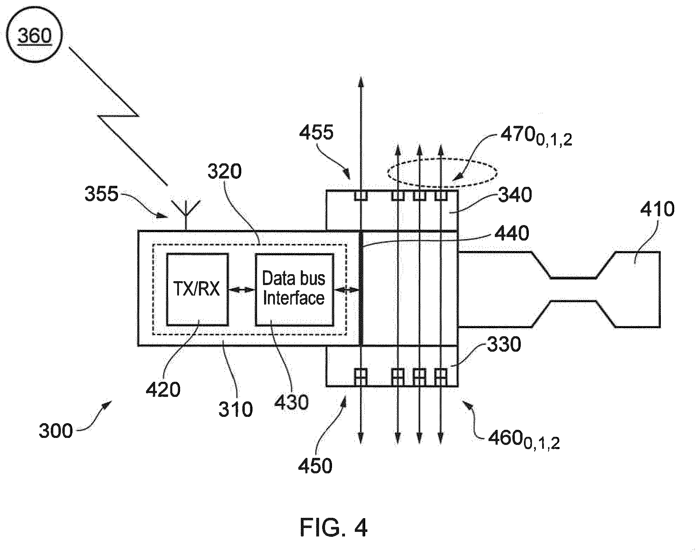

Figure 4 helps illustrate the adapter unit 300 in more detail. The adapter unit is apparatus for providing auxiliary equipment at a subsea location. The adapter unit 300 includes a housing 310 which is waterproof and pressure resistant to enable the adapter unit to be duly located at a subsea location which may be a deep water subsea location. Aptly the housing is waterproof and pressure resistant to a depth of 1km or more under the sea. The housing 310 carries a handle 410 which can be manipulated by an ROV. It will be appreciated that any form of carrying element can be provided to the adapter to enable a ROV or AUV or diver to duly locate the adapter unit at a desired location and mate it to wet mating connectors near an SCM or other such location.

As illustrated in Figure 4 by way of example the adapter unit can include an electronic auxiliary device. In the example shown in Figure 4 the electronic auxiliary device includes a transceiver 420 which is connectable to the antenna 355 and an associated data bus interface 430.

In the example shown in Figure 4 the data bus interface is connected to a data bus connector 440 which runs through the housing connecting to a respective connection element 450 of the plug wet mate connector 330 carried by the housing and a connection element 455 of the receptacle wet mate connector 340. The data bus connector is an example of a connector member that extends through the housing connecting connection elements.

Figure 4 helps illustrate how the housing 310 incorporates three additional through connectors which connect respective connection elements 460_{0,1,2} of the plug wet mate connector 330 to corresponding connection elements 470_{0,1,2} of the receptacle wet mate connector carried by the housing. In this way when the adapter is duly secured to the receptacle wet mate connector of the SCM via the plug wet mating connector 330 the connection elements 450, 460 of the plug wet mating connector 330 of the adapter unit make a data bus and electrical contact to the corresponding connection elements 455, 470 of the receptacle wet mating connector 340 of the adapter unit. When a flying lead including the plug type wet mating connector 240 is thereafter connected to the receptacle wet mating connector 340 of the adapter unit a through connection is made for the data bus and electrical connections. It will be appreciated that through connections can be made for any number and type of communication through the adapter unit. For example, the through connector can be an electrical connector for power or a data bus or a hydraulic through connector for hydraulic fluid or an optical connector for an optical fibre system. Other connection methodologies can of course be envisaged. One, two, three or more connection elements can be utilised per wet mating connector.

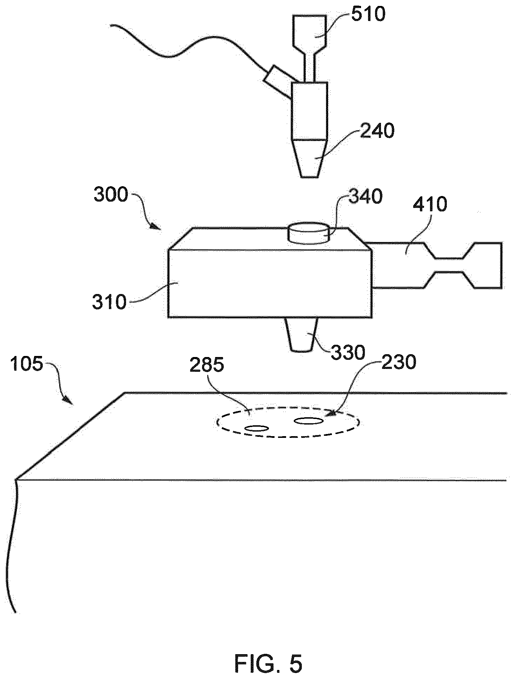

Figure 5 helps illustrate how the adapter unit 300 may be moved into place by an ROV holding handle 410 so that a plug wet mate connector 330 carried by the housing can be duly located into a corresponding receptacle wet mate connector 230 in the upper surface 285 of the SCM 125. Once duly located a flying lead terminated in a plug wet mating connector 240 can likewise be manipulated by a respective handle 510 to make corresponding connections.

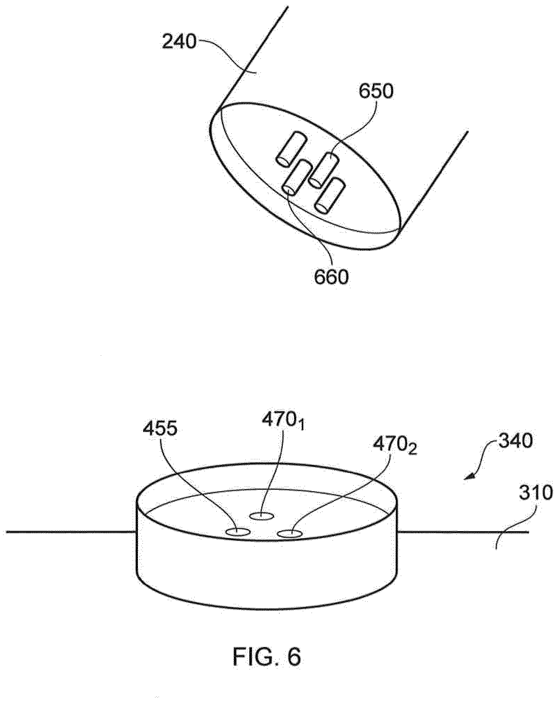

Figure 6 helps illustrate the connection elements 455, 470 of the receptacle wet mating connector 340 on the housing 310 of the adapter unit in more detail. As can be seen these connection elements are a port-like (or "female") connection element.

These duly engage with respective pin-like connection elements 650, 660 of the plug wet mating connector 240. It will be appreciated that any or all of the wet mating connectors previously described could include a latching element of a conventional type to ensure that duly mated plug and receptacle elements and their respective connections remain secured until released via a unlatching step.

Certain embodiments of the present invention have been described hereinabove with reference to implementation of a system at a "green field site". That is to say where the characteristics of subsea structures are clearly defined by virtue of them being newly designed and constructed. Here an adapter unit can be utilised where it is envisaged that changes to local sensors may be needed in the near or long term future.

However certain embodiments of the present invention are usable at so-called "brown field sites". Such a site may have been in operation for varying purposes over a significant period of time. Data associated with a subsea structure or multiple subsea structures at such a brown field site may never have been recorded or may now be lost. Alternatively over time modifications or wear and tear of the subsea structure may have varied resonance frequency details for the subsea structure. Here an adapter unit can be conveniently introduced as needed.

It will be appreciated that whilst a controller and associated data store have been described as part of the SEM 220 of an SCM 125, as an alternative that "intelligence" may be provided top side with the acoustic sensor outputs being provided via an umbilical data connection to a top side controller. Thereafter control signals from the top side controller can be provided via the umbilical to the SCM to control a state of the choke valve 140 and a sensor or other electronic element wirelessly connected to the adapter unit.

Certain embodiments of the present invention thus help provide an additional interface to sensors for practical and economic reasons relative to conventional techniques. Subsea wireless data connection can be provided with an adapter unit which is introduced between mating halves of a wet mating subsea electrical connector. In this way the adapter unit can be installed to connect firstly to a lower half of a wet mating subsea electrical connector picking up on existing data and power circuit within the connector shell. The upper half of the wet mating subsea electrical connector is connected to the upper surface of the adapter unit where it can then reconnect to an identical connector half to that originally provided on the top surface of the SCM. The adapter unit can optionally host various wireless technology solutions such as acoustic, free space optical, electromagnetic radiofrequency solutions. Aptly the adapter unit can host active electronics which take power from the electric circuit connections which pass through it and similarly connect to the data highways which pass through it.

Certain embodiments thus help provide for a connection of additional sensors at a subsea location which is facilitated even though there are physical limitations posed by existing legacy connection schemes. This can be achieved with minimal capital or installation cost as an SCM does not need to be retrieved to the surface to make changes.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. Apparatus for providing auxiliary equipment at a subsea location, comprising:
a housing (310) including at least one wet mate receptacle connector (340) and at least one wet mate plug connector (330) spaced apart from the wet mate receptacle connector (340); **characterised in that** the apparatus further comprises:
at least one electronic auxiliary device (320) in the housing (310);
at least one connector member (440) extending through a portion of the housing (310) connecting at least one connection element (455) of the wet mate receptacle connector (340) to a respective at least one connection element (450) of the wet mate plug connector (330); wherein
the auxiliary device (320) is connected to the connector member (440) in the housing (310) to thereby connect the auxiliary device (320) to the connector member (440).

2. The apparatus as claimed in claim 1, further comprising:
the auxiliary device (320) comprises a wireless communication device.

3. The apparatus as claimed in claim 2, further comprising:
the wireless communication device comprises an acoustic or optical or radio frequency communication device.

4. The apparatus as claimed in claim 2 or claim 3, further comprising:
the wireless communication device comprises a wireless receiver element for receiving data transmitted via a wireless communication link from at least one sensor (180, 185, 187) remote from said housing (310).

5. The apparatus as claimed in any one of claims 2 to 4, further comprising:
the wireless communication device comprises a wireless transmitter element for transmitting data to at least one remote sensor (180, 185, 187) via a wireless communication link.

6. The apparatus as claimed in any preceding claim, further comprising:
the housing (310) provides an adaptor unit securable between wet mating connectors of a subsea fixture and an associated flying lead respectively.

7. The apparatus as claimed in any preceding claim, further comprising:
the subsea location comprises a subsea production system installation that comprises a Subsea Control Module (SCM) and the SCM comprises the at least one wet mate receptacle connector.

8. A method of retro fitting auxiliary equipment at a subsea location, comprising the steps of:
disconnecting a flying lead, terminated by a flying lead wet mate plug connector, from a subsea fixture comprising at least one subsea fixture wet mate receptacle connector;
securing a housing (310) containing at least one electronic auxiliary device (320) to the subsea fixture by securing a housing wet mate plug connector (330) of the housing to the subsea fixture wet mate receptacle connector, the housing (310) containing at least one connector member (440) connecting at least one connection element (455) of a housing wet mate receptacle connector (340) to a respective at least one connection element (450) of the housing wet mate plug connector (330); and
re-connecting the flying lead wet mate plug connector to a housing wet mate receptacle connector of the housing.

9. The method as claimed in claim 8, further comprising:
electrically connecting the electronic auxiliary device (320) to a power supply by securing the housing (310) between the flying lead and subsea fixture.

10. The method as claimed in claim 8 or claim 9, further comprising:
connecting the electronic auxiliary device (320) to a data communication pathway extending between the subsea fixture and the flying lead by securing the housing (310) between the flying lead and the subsea fixture thereby locating at least one connector member of the housing (310) in communication with the subsea fixture and/or the flying head and the electronic auxiliary device (320).

11. The method as claimed in any one of claims 8 to 10, further comprising:
receiving data from or transmitting data to a sensor element (180, 185, 187) remote from the subsea fixture via the electronic auxiliary device (320).

12. The method as claimed in claim 11, further comprising:
providing data to be transmitted wirelessly from the electronic auxiliary device (320) to the electronic auxiliary device via a processor element of the subsea fixture or a processor element connected to the electronic auxiliary device via the flying lead.

13. The method as claimed in claim 11, further comprising:
providing data received wirelessly at the electronic auxiliary device (320) to a processor element in the subsea fixture or a processor element connected to the electronic auxiliary device via the flying lead.

14. The method as claimed in any one of claims 11 to 13, further comprising:
wirelessly communicating between the electronic auxiliary device (320) and a sensor (180, 185, 187) remote from the electronic auxiliary device (320) via acoustic and/or optical and/or radio frequency wireless communication.

15. A method of retrieving and/or replacing a subsea adaptor comprising a housing (310) containing a first electronic auxiliary device (320), at least one wet mate receptacle connector (340), at least one wet mate plug connector (330) and at least one connector member (440) connecting at least one connection element (455) of the wet mate receptacle connector (340) to a respective at least one connection element (450) of the housing wet mate plug connector (330), comprising the steps of:
via an ROV or AUV or diver, disconnecting a flying lead terminated in a flying lead wet mate plug connector from a first housing containing an associated first electronic auxiliary device;
disconnecting the first housing from a subsea fixture by unsecuring a housing wet mate plug connector from a subsea fixture wet mate receptacle connector; and
retrieving the first housing via the ROV or AUV or diver and/or replacing the first housing with a further housing containing an associated at least one further electronic auxiliary device via the ROV or AUV or diver.

## Patentansprüche

1. Vorrichtung zum Bereitstellen von Hilfsausrüstung an einem Unterwasserstandort, umfassend:
ein Gehäuse (310) einschließlich mindestens einer Nasssteckverbinder-Buchse (340) und mindestens eines Nasssteckverbinder-Steckers (330), der von der Nasssteckverbinder-Buchse (340) beabstandet ist; **dadurch gekennzeichnet, dass** die Vorrichtung ferner Folgendes umfasst:
mindestens eine elektronische Hilfsvorrichtung (320) im Gehäuse (310);
mindestens ein Verbinderstück (440), das sich durch einen Abschnitt des Gehäuses (310) erstreckt und mindestens ein Verbindungselement (455) der Nasssteckverbinder-Buchse (340) mit mindestens einem entsprechenden Verbindungselement (450) des Nasssteckverbinder-Steckers (330) verbindet; wobei
die Hilfsvorrichtung (320) mit dem Verbinderstück (440) im Gehäuse (310) verbunden ist, um dadurch die Hilfsvorrichtung (320) an das Verbinderstück (440) anzuschließen.

2. Vorrichtung nach Anspruch 1, ferner umfassend:
die Hilfsvorrichtung (320) umfasst eine Drahtloskommunikationsvorrichtung.

3. Vorrichtung nach Anspruch 2, ferner umfassend:
die Drahtloskommunikationsvorrichtung umfasst eine akustische oder optische oder Funkfrequenz-Kommunikationsvorrichtung.

4. Vorrichtung nach Anspruch 2 oder Anspruch 3, ferner umfassend:
die Drahtloskommunikationsvorrichtung umfasst ein drahtloses Empfängerelement zum Empfangen von Daten, die über eine Drahtloskommunikationsverbindung von mindestens einem Sensor (180, 185, 187) übertragen werden, der fern von dem Gehäuse (310) ist.

5. Vorrichtung nach einem der Ansprüche 2 bis 4, ferner umfassend:
die Drahtloskommunikationsvorrichtung umfasst ein drahtloses Senderelement zum Senden von Daten über eine Drahtloskommunikationsverbindung an mindestens einen Fernsensor (180, 185, 187).

6. Vorrichtung nach einem der vorstehenden Ansprüche, ferner umfassend:
das Gehäuse (310) stellt eine Adaptereinheit bereit, die jeweils zwischen Nasssteckverbindern einer Unterwasserhalterung und einer zugehörigen freien Anschlussleitung befestigbar ist.

7. Vorrichtung nach einem der vorstehenden Ansprüche, ferner umfassend:
der Unterwasserstandort umfasst eine Unterwasser-Produktionssysteminstallation, die ein Unterwasser-Steuermodul (SCM: Subsea Control Module) umfasst, und das SCM die mindestens eine Nasssteckverbinder-Buchse umfasst.

8. Verfahren zum Nachrüsten von Hilfsausrüstung an einem Unterwasserstandort, umfassend die Schritte:
Trennen einer freien Anschlussleitung, die in einem Nasssteckverbinder-Stecker mit freier Zuleitung endet, von einer Unterwasserhalterung, die mindestens eine Unterwasserhalterungs-Nasssteckverbinder-Buchse umfasst;
Befestigen eines Gehäuses (310), das mindestens eine elektronische Hilfsvorrichtung (320) enthält, an der Unterwasserhalterung durch Befestigen eines Gehäuse-Nasssteckverbinder-Steckers (330) des Gehäuses in der Unterwasserhalterungs-Nasssteckverbinder-Buchse, wobei das Gehäuse (310) mindestens ein Verbinderstück (440) enthält, das mindestens ein Verbindungselement (455) einer Gehäuse-Nasssteckverbinder-Buchse (340) mit mindestens einem entsprechenden Verbindungselement (450) des Gehäuse-Nasssteckverbinder-Steckers (330) verbindet; und
erneutes Zusammenfügen des Nasssteckverbinder-Steckers mit freier Zuleitung mit einer Gehäuse-Nasssteckverbinder-Buchse des Gehäuses.

9. Verfahren nach Anspruch 8, ferner umfassend:
elektrisches Anschließen der elektronischen Hilfsvorrichtung (320) an eine Stromversorgung durch Befestigen des Gehäuses (310) zwischen der freien Anschlussleitung und der Unterwasserhalterung.

10. Verfahren nach Anspruch 8 oder Anspruch 9, ferner umfassend:
Verbinden der elektronischen Hilfsvorrichtung (320) mit einem Datenkommunikationsweg, der sich zwischen der Unterwasserhalterung und der freien Anschlussleitung erstreckt, durch Befestigen des Gehäuses (310) zwischen der freien Anschlussleitung und der Unterwasserhalterung und dadurch Platzieren mindestens eines Verbinderstücks des Gehäuses (310) in Kommunikation mit der Unterwasserhalterung und/oder dem fliegenden Kopf und der elektronischen Hilfsvorrichtung (320).

11. Verfahren nach einem der Ansprüche 8 bis 10, ferner umfassend:
Empfangen von Daten von oder Senden von Daten an ein Sensorelement (180, 185, 187), das fern von der Unterwasserhalterung ist, mittels der elektronischen Hilfsvorrichtung (320).

12. Verfahren nach Anspruch 11, ferner umfassend:
Bereitstellen von Daten, die drahtlos von der elektronischen Hilfsvorrichtung (320) an die elektronische Hilfsvorrichtung gesendet werden sollen, mittels eines Prozessorelements der Unterwasserhalterung oder eines Prozessorelements, das über die freie Anschlussleitung mit der elektronischen Hilfsvorrichtung verbunden ist.

13. Verfahren nach Anspruch 11, ferner umfassend:
Bereitstellen von Daten, die drahtlos an der elektronischen Hilfsvorrichtung (320) empfangen werden, einem Prozessorelement in der Unterwasserhalterung oder einem Prozessorelement, das über die freie Anschlussleitung mit der elektronischen Hilfsvorrichtung verbunden ist.

14. Verfahren nach einem der Ansprüche 11 bis 13, ferner umfassend:
drahtloses Kommunizieren zwischen der elektronischen Hilfsvorrichtung (320) und einem Sensor (180, 185, 187), der fern von der elektronischen Hilfsvorrichtung (320) ist, mittels akustischer und/oder optischer und/oder Funkfrequenz-Drahtloskommunikation.

15. Verfahren zum Bergen und/oder Ersetzen eines Unterwasseradapters, der ein Gehäuse (310) umfasst, das eine erste elektronische Hilfsvorrichtung (320), mindestens eine Nasssteckverbinder-Buchse (340), mindestens einen Nasssteckverbinder-Stecker (330) und mindestens ein Verbinderstück (440) zum Verbinden mindestens eines Verbindungselements (455) der Nasssteckverbinder-Buchse (340) mit mindestens einem entsprechenden Verbindungselement (450) des Gehäuse-Nasssteckverbinder-Steckers (330) umfasst, umfassend die Schritte:
mittels eines ferngesteuerten Unterwasserfahrzeugs (ROV: Remotely Operated Vehicle) oder autonomen Unterwasserfahrzeugs (AUV: Autonomous Underwater Vehicle) oder Tauchers, Trennen einer freien Anschlussleitung, die in einem Nasssteckverbinder-Stecker mit freier Zuleitung endet, von einem ersten Gehäuse, das eine zugehörige erste elektronische Hilfsvorrichtung enthält;
Trennen des ersten Gehäuses von einer Unterwasserhalterung durch Lösen eines Gehäuse-Nasssteckverbinder-Steckers aus einer Unterwasserhalterungs-Nasssteckverbinder-Buchse; und
Bergen des ersten Gehäuses mittels des ROV oder AUV oder Tauchers und/oder Ersetzen des ersten Gehäuses durch ein weiteres Gehäuse, das mindestens eine weitere zugehörige elektronische Hilfsvorrichtung enthält, mittels des ROV oder AUV oder Tauchers.

## Revendications

1. Appareil pour la fourniture d'équipement auxiliaire à un emplacement sous-marin, comprenant :
un boîtier (310) incluant au moins un connecteur de réceptacle d'accouplement humide (340) et au moins un connecteur de fiche d'accouplement humide (330) espacé à l'écart du connecteur de réceptacle d'accouplement humide (340) ; **caractérisé en ce que** l'appareil comprend en outre :
au moins un dispositif auxiliaire électronique (320) dans le boîtier (310) ;
au moins un membre de connecteur (440) s'étendant à travers une partie du boîtier (310) connectant au moins un élément de connexion (455) du connecteur de réceptacle d'accouplement humide (340) à un respectif au moins un élément de connexion (450) du connecteur de fiche d'accouplement humide (330) ; dans lequel
le dispositif auxiliaire (320) est connecté au membre de connecteur (440) dans le boîtier (310) pour connecter de ce fait le dispositif auxiliaire (320) au membre de connecteur (440).

2. Appareil selon la revendication 1, comprenant en outre :
le dispositif auxiliaire (320) comprend un dispositif de communication sans fil.

3. Appareil selon la revendication 2, comprenant en outre :
le dispositif de communication sans fil comprend un dispositif de communication acoustique ou optique ou radiofréquence.

4. Appareil selon la revendication 2 ou la revendication 3, comprenant en outre :
le dispositif de communication sans fil comprend un élément de récepteur sans fil pour la réception de données transmises par l'intermédiaire d'une liaison de communication sans fil provenant d'au moins un capteur (180, 185, 187) distant dudit boîtier (310).

5. Appareil selon l'une quelconque des revendications 2 à 4, comprenant en outre :
le dispositif de communication sans fil comprend un élément de transmetteur sans fil pour la transmission de données à au moins un capteur (180, 185, 187) distant par l'intermédiaire d'une liaison de communication sans fil.

6. Appareil selon l'une quelconque revendication précédente, comprenant en outre :
le boîtier (310) fournit une unité d'adaptateur attachable entre des connecteurs d'accouplement humides d'un accessoire sous-marin et un fil volant associé respectivement.

7. Appareil selon l'une quelconque revendication précédente, comprenant en outre :
l'emplacement sous-marin comprend une installation de système de production sous-marine qui comprend un module de régulation sous-marin (SCM) et le SCM comprend l'au moins un connecteur de réceptacle d'accouplement humide.

8. Procédé de rétro-ajustement d'un équipement auxiliaire au niveau d'un emplacement sous-marin, comprenant les étapes consistant à :
déconnecter un fil volant, terminé par un connecteur de fiche d'accouplement humide de fil volant, d'un accessoire sous-marin comprenant au moins un connecteur de réceptacle d'accouplement humide d'accessoire sous-marin ;
attacher un boîtier (310) contenant au moins un dispositif auxiliaire électronique (320) à l'accessoire sous-marin par l'attache d'un connecteur de fiche d'accouplement humide de boîtier (330) du boîtier au connecteur de réceptacle d'accouplement humide d'accessoire sous-marin, le boîtier (310) contenant au moins un membre de connecteur (440) connectant au moins un élément de connexion (455) d'un connecteur de réceptacle d'accouplement humide de boîtier (340) à un respectif au moins un élément de connexion (450) du connecteur de fiche d'accouplement humide de boîtier (330) ; et
reconnecter le connecteur de fiche d'accouplement humide de fil volant à un connecteur de réceptacle d'accouplement humide de boîtier du boîtier.

9. Procédé selon la revendication 8, comprenant en outre :
la connexion électrique du dispositif auxiliaire électronique (320) à une alimentation en courant par l'attache du boîtier (310) entre le fil volant et l'accessoire sous-marin.

10. Procédé selon la revendication 8 ou la revendication 9, comprenant en outre :
la connexion du dispositif auxiliaire électronique (320) à une voie de communication de données s'étendant entre l'accessoire sous-marin et le fil volant par l'attache du boîtier (310) entre le fil volant et l'accessoire sous-marin positionnant de ce fait au moins un membre de connecteur du boîtier (310) en communication avec l'accessoire sous-marin et/ou la tête volante et le dispositif auxiliaire électronique (320).

11. Procédé selon l'une quelconque des revendications 8 à 10, comprenant en outre :
la réception de données provenant de ou la transmission de données à un élément de capteur (180, 185, 187) distant de l'accessoire sous-marin par l'intermédiaire du dispositif auxiliaire électronique (320).

12. Procédé selon la revendication 11, comprenant en outre :
la fourniture de données à transmettre sans fil provenant du dispositif auxiliaire électronique (320) au dispositif auxiliaire électronique par l'intermédiaire d'un élément de processeur de l'accessoire sous-marin ou d'un élément de processeur connecté au dispositif auxiliaire électronique par l'intermédiaire du fil volant.

13. Procédé selon la revendication 11, comprenant en outre :
la fourniture de données reçues sans fil au niveau du dispositif auxiliaire électronique (320) à un élément de processeur dans l'accessoire sous-marin ou un élément de processeur connecté au dispositif auxiliaire électronique par l'intermédiaire du fil volant.

14. Procédé selon l'une quelconque des revendications 11 à 13, comprenant en outre :
la communication sans fil entre le dispositif auxiliaire électronique (320) et un capteur (180, 185, 187) distant du dispositif auxiliaire électronique (320) par l'intermédiaire d'une communication sans fil acoustique et/ou optique et/ou radiofréquence.

15. Procédé de récupération et/ou remplacement d'un adaptateur sous-marin comprenant un boîtier (310) contenant un premier dispositif auxiliaire électronique (320), au moins un connecteur de réceptacle d'accouplement humide (340), au moins un connecteur de fiche d'accouplement humide (330) et au moins un membre de connecteur (440) connectant au moins un élément de connexion (455) du connecteur de réceptacle d'accouplement humide (340) à un respectif au moins un élément de connexion (450) du connecteur de fiche d'accouplement humide de boîtier (330), comprenant les étapes consistant à :
par l'intermédiaire d'un véhicule télécommandé (ROV) ou d'un véhicule sous-marin autonome (AUV) ou d'un plongeur, la déconnexion d'un fil volant terminé dans un connecteur de fiche d'accouplement humide de fil volant d'un premier boîtier contenant un premier dispositif auxiliaire électronique associé ;
la déconnexion du premier boîtier d'un accessoire sous-marin par le détachement d'un connecteur de fiche d'accouplement humide de boîtier d'un connecteur de réceptacle d'accouplement humide d'accessoire ; et
la récupération du premier boîtier par l'intermédiaire du ROV ou de l'AUV ou du plongeur et/ou le remplacement du premier boîtier avec un autre boîtier contenant un associé au moins un autre dispositif auxiliaire électronique par l'intermédiaire du ROV ou de l'AUV ou du plongeur.
